# FASCICULE DE BREVET EUROPEEN

(11) **EP 3 266 058 B1**
(45) Date de publication et mention de la délivrance du brevet: **26.02.2020**
(21) Numéro de dépôt: 16710264.9
(22) Date de dépôt: 03.03.2016
(51) Int. Cl.: H01M 4/131, H01M 4/1391, H01M 4/62, H01M 10/0525, H01M 4/136

(54) **ÉLECTRODES DE BATTERIES LI-ION À CONDUCTIVITÉ AMELIORÉE**
ELEKTRODEN FÜR LI-IONEN-BATTERIEN MIT VERBESSERTER LEITFÄHIGKEIT
ELECTRODES FOR LI-ION BATTERIES WITH IMPROVED CONDUCTIVITY

(30) Priorité: 03.03.2015 FR 1551763
(43) Date de publication de la demande: 10.01.2018
(73) Titulaire: Arkema France, 92700 Colombes (FR)
(72) Inventeur: CHAUVEAU, Jérôme, 27410 Mesnil en Ouche (FR); SCHMIDT, Grégory, 69700 Saint-Andéol-le-Château (FR); BIZET, Stéphane, 27170 Barc (FR)
(74) Mandataire: Albani, Dalila
(86) Numéro de dépôt international: PCT/FR2016/050481
(87) Numéro de publication internationale: WO 2016/139426

(56) Documents cités:
- WO-A1-2010/106292
- US-A1- 2008 241 705
- US-A1- 2009 286 163
- US-A1- 2011 143 196

## Description

### DOMAINE DE L'INVENTION

La présente invention a trait de manière générale au domaine du stockage d'énergie électrique dans des batteries secondaire lithium de type Li-ion. Plus précisément, l'invention se rapporte à un matériau d'électrode de batterie Li-ion, sa méthode de préparation et son utilisation en batterie Li-ion. L'invention a aussi pour objet les batteries Li-ion fabriquées en incorporant ce matériau d'électrode.

### ARRIERE-PLAN TECHNIQUE

Une cellule élémentaire d'une batterie secondaire Li-ion ou accumulateur au lithium comporte une anode (à la décharge), généralement en lithium métallique ou à base de carbone, et une cathode (idem : à la décharge), généralement en un composé d'insertion du lithium de type oxyde métallique tel que LiMn₂O₄, LiCoO₂ ou LiNiO₂, entre lesquelles se trouve intercalé un électrolyte conducteur des ions lithium.

Une cathode ou une anode comprennent généralement au moins un collecteur de courant sur lequel est déposé un matériau composite qui est constitué par : un ou plusieurs matériaux dits actifs car ils présentent une activité électrochimique vis-à-vis du lithium, un ou plusieurs polymères qui jouent le rôle de liant et qui sont généralement des polymères fluorés fonctionnalisés ou non comme le poly difluorovinyle ou des polymères à base aqueuse, de type Carboxyméthylcellulose ou des latex styrène-butadiène, plus un ou plusieurs additifs conducteurs électroniques qui sont généralement des formes allotropiques du carbone.

Les matériaux actifs classiques à l'électrode négative sont généralement le lithium métal, le graphite, les composites silicium/carbone, le silicium, les graphites fluorés de type CFₓ avec x compris entre 0 et 1 et les titanates type LiTi₅O₁₂.

Les matériaux actifs classiques à l'électrode positive sont généralement du type LiMO₂, du type LiMPO₄, du type Li₂MPO₃F, du type Li₂MSiO₄ où M est Co, Ni, Mn, Fe ou une combinaison de ces derniers, du type LiMn₂O₄ ou du type S₈.

Récemment, des additifs permettant d'améliorer la perméabilité de l'électrolyte au cœur de l'électrode ont été utilisés. Du fait de la demande croissante en batterie haute énergie c'est-à-dire avec des capacités de stockage électrique plus élevées, l'épaisseur des électrodes augmente et donc la perméabilité de l'électrolyte devient importante dans la résistance globale de la batterie. Dans le but d'améliorer cette perméabilité, le document WO2005/011044 décrit l'ajout de charge dite minérale d'oxyde de métaux tels qu'Al₂O₃ et SiO₂. Ces charges minérales sont ajoutées au cours du procédé classique de fabrication des électrodes. Ce procédé classique consiste à mélanger les différents constituants dans un solvant ou un mélange de solvants comme par exemple la N-méthylpyrrolidone, l'acétone, l'eau ou le carbonate d'éthylène :
1. au moins un additif conducteur à un taux allant de 1 à 5% en poids, de préférence de 1,5 à 4% ou 1 à 2,5% en poids, de préférence de 1,5 à 2,2% en poids par rapport au poids total du matériau composite ;
2. un oxyde, un phosphate, un fluorophosphate ou un silicate de lithium comme matériau actif d'électrode capable de former de façon réversible un composé d'insertion avec le lithium, ayant un potentiel électrochimique supérieur à 2V par rapport au couple Li/Li⁺ ;
3. un liant polymère.

L'encre obtenue est ensuite enduite sur le collecteur de courant et le ou les solvants sont évaporés par chauffage allant de 30 à 200 °C.

Les défauts de ces charges minérales sont de diminuer la quantité de matière active dans l'électrode et donc la capacité de la batterie mais également ces charges ne permettent d'améliorer que la diffusion macroscopique de l'électrolyte.

Or dans l'électrode, c'est la résistance de charge à l'interface matériau actif / électrolyte qui est limitative pour les performances de la batterie. Cette résistance est un effet microscopique qui ne peut être améliorée par l'ajout de charge minérale macroscopique.

Le demandeur a découvert que l'ajout d'un sel constitué d'un anion organique, choisi pour avoir une interaction favorable à la surface du matériau actif, permet d'augmenter la conductivité ionique de l'électrode.

Par ailleurs, il a été recherché une amélioration des propriétés de cohésion et d'adhésion de l'électrode sur métal par le choix particulier du liant polymère.

Le document US 2009/286163 décrit des compositions d'électrolyte pour batteries Li/Li ou Li/S, pouvant comprendre un sel de lithium. L'exemple 5 décrit un film cathodique composite comprenant : 30,1% en poids de noir de carbone, LiFePO4, PVDF en tant que liant polymère fluoré, et LiTFSI et PYR₁₄TFSI en tant que sels organiques.

Le document US 2008/0241705 décrit une électrode pour batterie comprenant différents types de sels de lithium. Certains modes de réalisation, décrits dans les exemples et illustrés dans le tableau 13, divulguent des compositions de cathode comprenant : le noir de Ketjen, LiCoO2 et Li₂CO₃, PVDF comme liant, et LiTFSI (sel d'ammonium quaternaire) en tant que sel organique à l'état fondu à la température ambiante.

Le document US 2011/143196 décrit l'utilisation de liquides ioniques dans des compositions d'électrodes pour batterie, mais seulement dans le cas d'électrodes négatives. Ce document ne décrit pas un matériau d'électrode formé par l'association d'un sel organique de formule A selon l'invention, avec un matériau carboné conducteur, un liant polymère fluoré et matériau actif d'électrode.

Le document WO 2010/106292 décrit un matériau composite d'électrode positive de batterie Li-ion, comprenant un matériau carboné conducteur, un matériau actif d'électrode et un liant polymère, ledit matériau étant dépourvu de sel(s) organique(s).

### RESUME DE L'INVENTION

L'invention concerne une composition d'électrode caractérisée par la présence simultanée d'un liant polymère fluoré de haute performance apte à assurer de bonnes propriétés de cohésion et d'adhésion à faible taux dans la cathode, et d'un sel organique particulier qui améliore la conductivité ionique de l'électrode.

L'invention concerne en premier lieu l'utilisation de sels organiques comme additifs de conductivité ionique dans la formulation d'électrodes de batteries secondaires Li-ion, de préférence dans la formulation de cathode. Ces sels peuvent également être utilisés dans la formulation d'électrodes de batteries Na-ion.

L'invention a également pour objet l'utilisation de ladite formulation comme électrode de batteries.

L'additif de conductivité ionique doit être capable de supporter les conditions du procédé de préparation des électrodes décrit précédemment. Par exemple, le LiPF₆, le sel de lithium actuellement utilisé dans la plupart des électrolytes, de part son instabilité à la température et aux solvants nucléophiles, ne peut être utilisé comme additif de conductivité ionique.

L'invention concerne aussi un matériau composite d'électrode de batterie Li-ion, de préférence matériau d'électrode positive comprenant :
a) au moins un additif conducteur électronique à un taux allant de 1 à 5% en poids, de préférence de 1,5 à 4% ou de 1 à 2,5% en poids, de préférence de 1,5 à 2,2% en poids par rapport au poids total du matériau composite ;
b) un oxyde, un phosphate, un fluorophosphate ou un silicate de lithium comme matériau actif d'électrode capable de former de façon réversible un composé d'insertion avec le lithium, ayant un potentiel électrochimique supérieur à 2V par rapport au couple Li/Li⁺ ;
c) un liant polymère ;
d) au moins un sel organique de formule A.

Dans la formule (A), R représente un groupement choisi parmi F, CN, NO₂, S-CN, N=C=S, -OCₙHₘFₚ, -CₙHₘFₚ avec n, m et p étant des nombres entiers, et M+ représentant un cation lithium ou un cation sodium. Les composés de formule (A) particulièrement préférés sont les imidazolates de lithium : 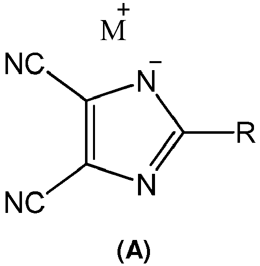 où R représente F ou -CₙHₘFₚ. Ces sels de lithium sont particulièrement intéressants de par leur insensibilité à l'eau ce qui permet une utilisation simplifiée dans le processus de préparation de l'électrode.

De préférence, le constituant (d) peut varier entre 0,01 et 10% et avantageusement de 0,05 à 5 % en poids par rapport au poids total du matériau.

L'additif conducteur électronique est de préférence choisi parmi les différentes formes allotropiques du carbone ou des polymères organiques conducteurs.

De manière caractéristique, le liant polymère est choisi parmi des liants polymères fluorés de haute masse moléculaire et/ou porteurs de fonction(s) susceptible(s) de développer de l'adhésion sur un substrat métallique et une bonne cohésion du matériau composant l'électrode.

Selon un mode de réalisation, ledit liant est un polymère fluoré de haute masse moléculaire, de préférence un polymère fluoré de très haute masse moléculaire. Les polymères fluorés sont choisis parmi les copolymères de fluorure de vinylidène et chlorotrifluoroéthylène, et le poly(fluorure de vinylidène).

Parmi ceux-ci est préféré le poly(fluorure de vinylidène) ou PVDF ayant une viscosité à l'état fondu supérieure ou égale à 2000 Pa.s à 232°C sous un cisaillement de 100s⁻¹. La viscosité est mesurée à 232°C, à un gradient de cisaillement de 100 s⁻¹ à l'aide d'un rhéomètre capillaire ou d'un rhéomètre à plaques parallèles, selon la norme ASTM D3825. Les deux méthodes donnent des résultats similaires.

Le terme «PVDF» employé ici comprend des homopolymères de fluorure de vinylidène (VDF) ou des copolymères de VDF et d'au moins un autre comonomère dans lesquels le VDF représente au moins 50% en moles. Les comonomères polymérisables avec le VDF sont choisis parmi le fluorure de vinyle, le trifluoroéthylène, le chlorotrifluoroéthylène (CTFE), le 1,2-difluoroéthylène, tétrafluoroéthylène (TFE), l'hexafluoropropylène (HFP), les perfluoro(alkyl vinyl) éthers tels que le perfluoro(méthylvinyl)éther (PMVE), le perfluoro(éthylvinyl)éther (PEVE), le perfluoro(propylvinyl)éther (PPVE), le perfluoro(1,3-dioxozole); le perfluoro(2,2diméthyl-1,3dioxozole) (PDD), le produit de formule CF2=CFOCF2CF(CF3)OCF2CF2X dans laquelle X est SO2F, CO2H, CH2OH; CH2OCN ou CH2OPO3H, le produit de formule CF2=CFOCF2CF2SO2F; le produit de formule F(CF2)nCH2OCF=CF2 dans laquelle n est 1,2,3,4 ou 5, le produit de formule R1CH2OCF=CF2 dans laquelle R1 est l'hydrogène ou F(CF2)z et z vaut 1, 2, 3, ou 4; le produit de formule R3OCF=CH2 dans laquelle R3 est F(CF2)z et z vaut 1, 2, 3, ou 4, ou encore le perfluorobutyléthylène (PFBE), le fluoroéthylènepropylène (FEP), le 3,3,3-trifluoropropène, le 2-trifluorométhyl-3,3,3-trifluoro-1-propène le 2,3,3,3-tetrafluoropropène ou HFO-1234yf, le E-1,3,3,3-tetrafluoropropène ou HFO-1234zeE, le Z-1,3,3,3-tetrafluoropropène ou HFO-1234zeZ, le 1,1,2,3-tetrafluoropropene ou HFO-1234yc, le 1,2,3,3-tetrafluoropropène ou HFO-1234ye, le 1,1,3,3-tetrafluoropropène ou HFO-1234zc et le chlorotetrafluoropropène ou HCFO-1224.

Selon un mode de réalisation, le copolymère est un terpolymère.

Selon un autre mode de réalisation, ledit liant est un polymère fluoré porteur de fonction(s) susceptible(s) de développer de l'adhésion sur un substrat métallique et une bonne cohésion du matériau composant l'électrode. Il peut s'agir d'un polymère à base de VDF (contenant au moins 50% en moles de VDF) comprenant en outre des unités portant au moins l'une des fonctions suivantes : acide carboxylique, anhydride d'acide carboxylique, esters d'acide carboxylique, groupes époxy (tel que le glycidyle), groupes amide, groupes alcool, groupes carbonyle, groupes mercapto, sulfure, groupes oxazoline et groupes phénoliques. La fonction est introduite sur le polymère fluoré par une réaction chimique qui peut être du greffage ou une copolymérisation du polymère fluoré avec un composé portant au moins un desdits groupes fonctionnels, selon des techniques bien connues par l'homme du métier.

Selon un mode de réalisation, la fonction acide carboxylique est un groupe hydrophile de type acide (méth)acrylique choisi parmi l'acide acrylique, l'acide méthacrylique, hydroxyéthyl(méth)acrylate, hydroxypropyl(méth)acrylate et hydroxyéthylhexyl(méth)acrylate.

Selon un mode de réalisation, les unités portant la fonction acide carboxylique comprennent en outre un hétéroatome choisi parmi l'oxygène, le soufre, l'azote et le phosphore.

Lorsque le polymère fluoré est fonctionnalisé, la teneur en groupes fonctionnels assurant l'adhésion du liant sur un métal est d'au moins 0,05% molaire, de préférence d'au moins 0,15 % molaire.

Les supports métalliques des électrodes sont généralement en aluminium pour la cathode et en cuivre pour l'anode.

### PREPARATION DE L'ELECTRODE

La présente invention a également pour objet un procédé de préparation du matériau composite d'électrode décrit ci-dessus, qui comprend
i) au moins une étape de préparation d'une suspension mettant en jeu :
   - un ou des sels organiques de formule A;
   - un additif conducteur électronique ;
   - un liant polymère selon l'invention;
   - un ou plusieurs solvants volatils ;
   - un matériau actif d'électrode choisi parmi un oxyde, un phosphate, un fluorophosphate ou un silicate de lithium,
ii) et une étape d'élaboration d'un film à partir de la suspension préparée en (i).

La suspension peut être obtenue par dispersion et homogénéisation par tout moyen mécanique, par exemple à l'aide d'un rotor stator, d'une ancre d'agitation ou par ultrasons.

La suspension peut être préparée à partir du polymère à l'état pur ou sous forme d'une solution dans un ou plusieurs solvant(s) volatil(s), des sels organiques à l'état pur ou sous forme d'une suspension dans un ou plusieurs solvants volatils, de l'additif conducteur électronique et de la matière active à l'état pur, éventuellement après une étape de séchage à une température comprise entre 50 et 150°C.

De préférence, le ou les solvants volatils est ou sont choisi(s) parmi un solvant organique ou l'eau. Comme solvant organique, on peut citer notamment les solvants organiques la N-méthyle pyrrolidone (NMP) ou le diméthyle sulfoxide (DMSO).

La préparation de la suspension peut être effectuée en une seule étape ou en deux ou trois étapes successives. Lorsqu'elle est effectuée en deux étapes successives, un mode de réalisation consiste à préparer dans la première étape une dispersion contenant le solvant, le ou les sels organiques et éventuellement tout ou partie du liant polymère, à l'aide de moyens mécaniques, puis à ajouter dans une deuxième étape à cette première dispersion les autres constituants du matériau composite. Le film est ensuite obtenu à partir de la suspension à l'issue de la deuxième étape.

Lorsqu'elle est réalisée en trois étapes successives, un mode de réalisation consiste à préparer dans la première étape une dispersion contenant le ou les sels organiques et éventuellement tout ou partie du liant polymère dans un solvant, puis à ajouter dans la deuxième étape le matériau actif et à éliminer le solvant pour obtenir une poudre, ensuite à ajouter du solvant et le restant des constituants du matériau composite pour obtenir une suspension. Le film est ensuite obtenu à partir de la suspension à l'issue de la troisième étape.

La mise en solution des sels organiques de formule A peut se faire à des températures allant de 0 à 150°C de préférence entre 10 et 100°C.

La présente invention a en outre pour objet des batteries Li-ion incorporant ledit matériau.

### Exemple 1 : Procédé de fabrication d'une cathode et composition d'une cathode selon l'invention

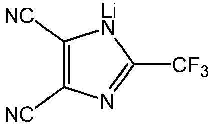

L'agitation se fait à l'aide d'un un rotor stator. Dans un flacon, mettre 0,0197 g de LiTDI (formule ci-dessus). Solubiliser avec 7,08 g de NMP (N-méthyle pyrrolidone), laisser agiter pendant 10 min à 25°C. Ajouter 0,1974 g de liant selon l'invention (choisi parmi les liants définis ci-dessous), laisser agiter pendant 30 min à 50°C. Ajouter ensuite 0,1982 g de carbone Super P (Timcal®) et laisser agiter pendant 2h. Enfin ajouter 4,5567 g de LiMn₂O₄ et 2,52 g de NMP et laisser agiter pendant 3h. Etaler ensuite la suspension sous forme de film avec une épaisseur de 100 µm sur une feuille d'aluminium. Laisser sécher le film pendant 5h à 130°C.

Liants fluorés selon l'invention :
1a- Kynar® HSV900 : Homopolymère de PVDF commercialisé par Arkema France, de viscosité à l'état fondu supérieure à 4000 Pa.s à 232°C et 100s⁻¹
2a - Kynar® HSV500 : PVDF homopolymère commercialisé par Arkema France, de viscosité à l'état fondu de 3000 Pa.s à 232°C et 100s⁻¹
3a - Kynarflex® LBG : Copolymère de VDF et HFP commercialisé par Arkema France, de viscosité à l'état fondu de 3300 Pa.s à 232°C et 100S⁻¹
4a - Kureha® 7200 : PVDF homopolymère commercialisé par Kureha, de viscosité à l'état fondu supérieure à 2700 Pa.s à 232°C et 100s⁻¹
5a - Solef® 5130 : PVDF fonctionnalisé commercialisé par Solvay, de viscosité à l'état fondu supérieure à 2700 Pa.s. à 232°C et 100s⁻¹.

### Exemple 2: Procédé de fabrication d'une cathode et composition d'une cathode selon l'invention

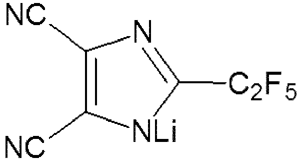

L'agitation se fait à l'aide d'un un rotor stator. Dans un flacon, mettre 0,0182 g de LiPDI (formule ci-dessus). Solubiliser avec 6.53 g de NMP (N-méthyle pyrrolidone), laisser agiter pendant 10 min à 25°C. Ajouter 0,1821 g de liant selon l'invention (choisi parmi les liants définis ci-dessous), laisser agiter pendant 30 min à 50°C. Ajouter ensuite 0,1829 g de carbone Super P (Timcal®) et laisser agiter pendant 2h. Enfin ajouter 4,2045 g de LiFePO₄ et 2,32 g de NMP et laisser agiter pendant 3h. Etaler ensuite la suspension sous forme de film avec une épaisseur de 100 µm sur une feuille d'aluminium. Laisser sécher le film pendant 4h à 130°C.

Liants fluorés selon l'invention :
1a- Kynar® HSV900 : Homopolymère de PVDF commercialisé par Arkema France, de viscosité à l'état fondu supérieure à 4000 Pa.s à 232°C et 100s⁻¹
2a - Kynar® HSV500 : PVDF homopolymère commercialisé par Arkema France, de viscosité à l'état fondu de 3000 Pa.s à 232°C et 100s⁻¹
3a - Kynarflex® LBG : Copolymère de VDF et HFP commercialisé par Arkema France, de viscosité à l'état fondu de 3300 Pa.s à 232°C et 100s⁻¹
4a - Kureha® 7200 : PVDF homopolymère commercialisé par Kureha, de viscosité à l'état fondu supérieure à 2700 Pa.s à 232°C et 100s⁻¹
5a - Solef® 5130 : PVDF fonctionnalisé commercialisé par Solvay, de viscosité à l'état fondu supérieure à 2700 Pa.s. à 232°C et 100s⁻¹.

## Revendications

1. Matériau composite d'électrode de batterie, de préférence matériau d'électrode positive, comprenant :
a) au moins un additif conducteur électronique à un taux allant de 1 à 5%, de préférence de 1,5 à 4% ou de 1 à 2,5% en poids, de préférence de 1,5 à 2,2% en poids par rapport au poids total du matériau composite ;
b) un oxyde, un phosphate, un fluorophosphate ou un silicate de lithium comme matériau actif d'électrode capable de former de façon réversible un composé d'insertion avec le lithium, ayant un potentiel électrochimique supérieur à 2V par rapport au couple Li/Li⁺ ;
c) un liant polymère fluoré ;
d) au moins un sel organique,
**caractérisé en ce que** ledit sel organique présente la formule A : 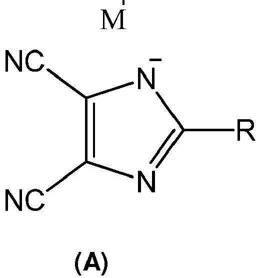
avec R représentant un groupement dans le groupe constitué parmi F, CN, NO₂, S-CN, N=C=S, -OCₙHₘFₚ, -CₙHₘFₚ avec n, m et p étant des nombres entiers, et M+ représentant un cation lithium ou un cation sodium,
et **en ce que** ledit liant est un polymère fluoré de haute masse moléculaire et/ou porteur de fonction(s) susceptible(s) de développer de l'adhésion sur un substrat métallique.

2. Matériau selon la revendication 1 caractérisé les composés de formule A sont des imidazolates de lithium.

3. Matériau selon l'une des revendications 1 ou 2 **caractérisé en ce que** le ou les sel (s) organique(s) représente(nt) entre 0,01 et 10%, de préférence entre 0,05 et 5 % en poids par rapport au poids total du matériau.

4. Matériau selon l'une quelconque des revendications 1 à 3 **caractérisé en ce que** ledit liant est un polymère fluoré de haute masse moléculaire, de préférence un polymère fluoré de très haute masse moléculaire, choisi parmi les copolymères de fluorure de vinylidène et chlorotrifluoroéthylène, et le poly(fluorure de vinylidène)

5. Matériau selon l'une des revendications 1 à 4 dans lequel ledit liant est le poly(fluorure de vinylidène) ou PVDF ayant une viscosité à l'état fondu supérieure ou égale à 2000 Pa.s comme mesurée à 232°C sous un cisaillement de 100s⁻¹ selon la norme ASTM D3825.

6. Matériau selon l'une des revendications 1 à 3 dans lequel ledit liant est un PVDF portant au moins l'une des fonctions suivantes : acide carboxylique, anhydride d'acide carboxylique, esters d'acide carboxylique, groupes époxy (tel que le glycidyle), groupes amide, groupes alcool, groupes carbonyle, groupes mercapto, sulfure, groupes oxazoline et groupes phénoliques.

7. Matériau selon la revendication 6 dans lequel la fonction acide carboxylique est choisie parmi l'acide acrylique, l'acide méthacrylique, hydroxyéthyl(méth)acrylate, hydroxypropyl(méth)acrylate et hydroxyéthylhexyl(méth)acrylate.

8. Matériau selon l'une des revendications 5 à 7 dans lequel le PVDF correspond à des homopolymères de fluorure de vinylidène (VDF) ou des copolymères de VDF et d'au moins un autre comonomère dans lesquels le VDF représente au moins 50% en moles, ledit comonomère étant choisis parmi le fluorure de vinyle, le trifluoroéthylène, le chlorotrifluoroéthylène (CTFE), le 1,2-difluoroéthylène, tétrafluoroéthylène (TFE), l'hexafluoropropylène (HFP), les perfluoro(alkyl vinyl) éthers tels que le perfluoro(méthylvinyl)éther (PMVE), le perfluoro(éthylvinyl)éther (PEVE), le perfluoro(propylvinyl)éther (PPVE), le perfluoro(1,3-dioxozole); le perfluoro(2,2diméthyl-1,3dioxozole) (PDD), le produit de formule CF2=CFOCF2CF(CF3)OCF2CF2X dans laquelle X est SO2F, CO2H, CH2OH; CH2OCN ou CH2OPO3H, le produit de formule CF2=CFOCF2CF2SO2F; le produit de formule F(CF2)nCH2OCF=CF2 dans laquelle n est 1,2,3,4 ou 5, le produit de formule R1CH2OCF=CF2 dans laquelle R1 est l'hydrogène ou F(CF2)z et z vaut 1, 2, 3, ou 4; le produit de formule R3OCF=CH2 dans laquelle R3 est F(CF2)z et z vaut 1, 2, 3, ou 4, ou encore le perfluorobutyléthylène (PFBE), le fluoroéthylènepropylène (FEP), le 3,3,3-trifluoropropène, le 2-trifluorométhyl-3,3,3-trifluoro-1-propène, le 2,3,3,3-tetrafluoropropène ou HFO-1234yf, le E-1,3,3,3-tetrafluoropropène ou HFO-1234zeE, le Z-1,3,3,3-tetrafluoropropène ou HFO-1234zeZ, le 1,1,2,3-tetrafluoropropene ou HFO-1234yc, le 1,2,3,3-tetrafluoropropène ou HFO-1234ye, le 1,1,3,3-tetrafluoropropène ou HFO-1234zc et le chlorotetrafluoropropène ou HCFO-1224.

9. Matériau selon l'une quelconque des revendications précédentes **caractérisé en ce que** l'additif conducteur électronique est choisi parmi les différentes formes allotropiques du carbone ou des polymères organiques conducteurs.

10. Procédé de préparation du matériau selon l'une quelconque des revendications 1 à 9 **caractérisé en ce qu'**il comprend (i) au moins une étape de préparation d'une suspension mettant en jeu :
- un ou des sels organiques de formule A,
- un additif conducteur électronique ;
- un liant polymère selon l'une des revendications 4 à 8,
- un ou plusieurs solvants volatils ;
- un matériau actif d'électrode choisi parmi un oxyde, un phosphate, un fluorophosphate ou un silicate de lithium, et
ii) une étape d'élaboration d'un film à partir de la suspension préparée en (i).

11. Procédé selon la revendication 10 **caractérisé en ce que** le ou les solvant(s) volatil(s) est ou sont choisi(s) parmi des solvants organiques et l'eau.

12. Procédé selon la revendication 11 **caractérisé en ce que** les solvants organiques sont choisis parmi la N-méthyle pyrrolidone ou le diméthyle sulfoxide.

13. Batterie Li-ion comprenant le matériau selon l'une quelconque des revendications 1 à 9.

14. Utilisation d'au moins un sel de formule A, défini selon l'une des revendications 1 à 3, comme additif de conductivité ionique dans la fabrication d'un matériau composite d'électrode de batteries secondaires Li-ion ou Na-ion.

## Patentansprüche

1. Batterieelektroden-Verbundmaterial, vorzugsweise Positivelektrodenmaterial, umfassend:
a) mindestens ein elektronenleitendes Additiv in einem Gehalt im Bereich von 1 bis 5 Gew.-%, vorzugsweise 1,5 bis 4 Gew.-% oder 1 bis 2,5 Gew.-%, vorzugsweise von 1,5 bis 2,2 Gew.-%, bezogen auf das Gesamtgewicht des Verbundmaterials,
b) ein Lithiumoxid, -phosphat, -fluorophosphat oder -silikat als Elektrodenaktivmaterial, das mit dem Lithium reversibel eine Einlagerungsverbindung bilden kann und ein elektrochemisches Potential von mehr als 2 V gegenüber dem Li/Li⁺-Paar aufweist,
c) ein Fluorpolymerbindemittel,
d) mindestens ein organisches Salz,
**dadurch gekennzeichnet, dass** das organische Salz die Formel A aufweist: 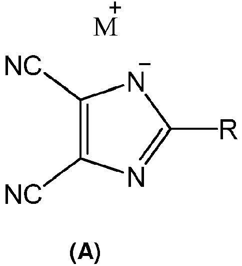
wobei R für eine Gruppe aus der Gruppe bestehend aus F, CN, NO₂, S-CN, N=C=S, -OCₙHₘFₚ und -CₙHₘFₚ steht, wobei n, m und p ganze Zahlen sind, und M+ für ein Lithium-Kation oder ein Natrium-Kation steht,
und dass es sich bei dem Bindemittel um ein Fluorpolymer handelt, das eine hohe Molmasse aufweist und/oder eine oder mehrere Funktionen, die Haftung auf einem Metallsubstrat entwickeln können, trägt.

2. Material nach Anspruch 1, **dadurch gekennzeichnet, dass** es sich bei den Verbindungen der Formel A um Lithiumimidazolate handelt.

3. Material nach einem der Ansprüche 1 oder 2, **dadurch gekennzeichnet, dass** das organische Salz bzw. die organischen Salze zwischen 0,01 und 10 Gew.-% und vorzugsweise zwischen 0,05 und 5 Gew.-%, bezogen auf das Gesamtgewicht des Materials, ausmacht bzw. ausmachen.

4. Material nach einem der Ansprüche 1 bis 3, **dadurch gekennzeichnet, dass** es sich bei dem Bindemittel um ein Fluorpolymer mit hoher Molmasse, vorzugsweise ein Fluorpolymer mit sehr hoher Molmasse, ausgewählt aus Copolymeren von Vinylidenfluorid und Chlortrifluorethylen und Poly(vinylidenfluorid), handelt.

5. Material nach einem der Ansprüche 1 bis 4, wobei es sich bei dem Bindemittel um Poly(vinylidenfluorid) oder PVDF mit einer Schmelzeviskosität größer oder gleich 2000 Pa.s gemäß Messung bei 232 °C unter einer Scherung von 100 s⁻¹ gemäß ASTM-Norm D3825 handelt.

6. Material nach einem der Ansprüche 1 bis 3, wobei es sich bei dem Bindemittel um ein PVDF handelt, das mindestens eine der folgenden Funktionen trägt: Carbonsäure, Carbonsäureanhydrid, Carbonsäureester, Epoxidgruppen (wie Glycidyl), Amidgruppen, Alkoholgruppen, Carbonylgruppen, Mercaptogruppen, Sulfid, Oxazolingruppen und Phenolgruppen.

7. Material nach Anspruch 6, wobei die Carbonsäurefunktion aus Acrylsäure, Methacrylsäure, Hydroxyethyl(meth)acrylat, Hydroxypropyl(meth)acrylat und Hydroxyethylhexyl(meth)acrylat ausgewählt ist.

8. Material nach einem der Ansprüche 5 bis 7, wobei das PVDF Homopolymeren von Vinylidenfluorid (VDF) oder Copolymeren von VDF und mindestens einem anderen Comonomer, in denen das VDF mindestens 50 Mol-% ausmacht, entspricht, wobei das Comonomer aus Vinylfluorid, Trifluorethylen, Chlortrifluorethylen (CTFE), 1,2-Difluorethylen, Tetrafluorethylen (TFE), Hexafluorpropylen (HFP), Perfluor(alkylvinyl)ethern, wie Perfluor(methyl-vinyl)ether (PMVE), Perfluor(ethylvinyl)ether (PEVE), Perfluor(propylvinyl)ether (PPVE), Perfluor(1,3-dioxol), Perfluor(2,2-dimethyl-1,3-dioxol) (PDD), dem Produkt der Formel CF₂=CFOCF₂CF(CF₃)OCF₂CF₂X, wobei X für SO2F, CO2H, CH₂OH, CH₂OCN oder CH₂OPO₃H steht, dem Produkt der Formel CF₂=CFOCF₂CF₂SO₂F, dem Produkt der Formel F (CF₂)ₙCH₂OCF=CF₂, wobei n für 1, 2, 3, 4 oder 5 steht, dem Produkt der Formel R1CH₂OCF=CF₂, wobei R1 für Wasserstoff oder F(CF₂)_{z} steht und z den Wert 1, 2, 3 oder 4 aufweist, dem Produkt der Formel R3OCF=CH₂, wobei R3 für F(CF₂)_{z} steht und z den Wert 1, 2, 3 oder 4 aufweist, oder auch Perfluorbutylethylen (PFBE), Fluorethylenpropylen (FEP), 3,3,3-Trifluorpropen, 2-Trifluormethyl-3,3,3-trifluor-1-propen, 2,3,3,3-Tetrafluorpropen oder HFO-1234yf, E-1,3,3,3-Tetrafluorpropen oder HFO-1234zeE, Z-1,3,3,3-Tetrafluorpropen oder HFO-1234zeZ, 1,1,2,3-Tetrafluorpropen oder HFO-1234yc, 1,2,3,3-Tetrafluorpropen oder HFO-1234ye, 1,1,3,3-Tetrafluorpropen oder HFO-1234zc und Chlortetrafluorpropen oder HCFO-1224 ausgewählt ist.

9. Material nach einem der vorhergehenden Ansprüche, **dadurch gekennzeichnet, dass** das elektronenleitende Additiv aus den verschiedenen allotropen Formen von Kohlenstoff oder leitenden organischen Polymeren ausgewählt ist.

10. Verfahren zur Herstellung des Materials nach einem der Ansprüche 1 bis 9, **dadurch gekennzeichnet, dass** es (i) mindestens einen Schritt der Herstellung einer Suspension unter Verwendung von
- einem oder mehreren organischen Salzen der Formel A,
- einem elektronenleitenden Additiv,
- einem Polymerbindemittel nach einem der Ansprüche 4 bis 8,
- einem oder mehreren flüchtigen Lösungsmitteln,
- einem Elektrodenaktivmaterial, das aus einem Lithiumoxid, -phosphat, -fluorophosphat oder
- silikat ausgewählt ist, und
ii) einen Schritt der Herstellung eines Films aus der in (i) hergestellten Suspension umfasst.

11. Verfahren nach Anspruch 10, **dadurch gekennzeichnet, dass** das flüchtige Lösungsmittel bzw. die flüchtigen Lösungsmittel aus organischen Lösungsmitteln und Wasser ausgewählt wird bzw. werden.

12. Verfahren nach Anspruch 11, **dadurch gekennzeichnet, dass** die organischen Lösungsmittel aus N-Methylpyrrolidon und Dimethylsulfoxid ausgewählt werden.

13. Li-Ionen-Batterie, umfassend das Material nach einem der Ansprüche 1 bis 9.

14. Verwendung mindestens eines Salzes der Formel A gemäß einem der Ansprüche 1 bis 3 als ionisches Leitfähigkeitsadditiv bei der Herstellung eines Elektrodenverbundmaterials für Li-Ionen- oder Na-Ionen-Sekundärbatterien.

## Claims

1. Battery electrode composite material, preferably a positive electrode material, comprising:
a) at least one electron-conducting additive at a content ranging from 1 to 5%, preferably from 1.5 to 4% or from 1 to 2.5% by weight, preferably from 1.5 to 2.2% by weight, with respect to the total weight of the composite material;
b) a lithium oxide, phosphate, fluorophosphate or silicate as electrode active material capable of reversibly forming an insertion compound with lithium, having an electrochemical potential of greater than 2V with respect to the Li/Li⁺ pair;
c) a fluorinated polymer binder;
d) at least one organic salt,
**characterized in that** said organic salt exhibits the formula A: 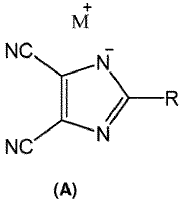
with R representing a group from the group consisting of F, CN, NO₂, S-CN, N=C=S, -OCₙHₘFₚ, -CₙHₘFₚ with n, m and p being integers, and M⁺ representing a lithium cation or a sodium cation,
and **in that** said binder is a fluoropolymer of high molecular weight and/or which carries functional group(s) capable of developing adhesion to a metal substrate.

2. Material according to Claim 1, **characterized in that** the compounds of formula A are lithium imidazolates.

3. Material according to either of Claims 1 and 2, **characterized in that** the organic salt(s) represent(s) between 0.01 and 10% and preferably between 0.05 and 5% by weight, with respect to the total weight of the material.

4. Material according to any one of Claims 1 to 3, **characterized in that** said binder is a fluoropolymer of high molecular weight, preferably a fluoropolymer of very high molecular weight, chosen from vinylidene fluoride and chlorotrifluoroethylene copolymers, and poly(vinylidene fluoride).

5. Material according to one of Claims 1 to 4, in which said binder is poly(vinylidene fluoride) or PVDF having a melt viscosity of greater than or equal to 2000 Pa.s as measured at 232°C under shearing of 100S⁻¹ according to the standard ASTM D3825.

6. Material according to one of Claims 1 to 3, in which said binder is a PVDF carrying at least one of the following functional groups: carboxylic acid, carboxylic acid anhydride, carboxylic acid esters, epoxy groups (such as glycidyl), amide groups, alcohol groups, carbonyl groups, mercapto groups, sulfide, oxazoline groups and phenol groups.

7. Material according to Claim 6, in which the carboxylic acid functional group is chosen from acrylic acid, methacrylic acid, hydroxyethyl (meth)acrylate, hydroxypropyl (meth)acrylate and hydroxyethylhexyl (meth)acrylate.

8. Material according to one of Claims 5 to 7, in which the PVDF corresponds to vinylidene fluoride (VDF) homopolymers or copolymers of VDF and of at least one other comonomer in which the VDF represents at least 50 mol%, said comonomer being chosen from vinyl fluoride, trifluoroethylene, chlorotrifluoroethylene (CTFE), 1,2-difluoroethylene, tetrafluoroethylene (TFE), hexafluoropropylene (HFP), perfluoro(alkyl vinyl) ethers, such as perfluoro(methyl vinyl) ether (PMVE), perfluoro(ethyl vinyl) ether (PEVE) or perfluoro(propyl vinyl) ether (PPVE), perfluoro(1,3-dioxole), perfluoro(2,2-dimethyl-1,3-dioxole) (PDD), the product of formula CF₂=CFOCF₂CF (CF₃) OCF₂CF₂X in which X is SO2F, CO2H, CH₂OH, CH₂OCN or CH₂OPO₃H, the product of formula CF₂=CFOCF₂CF₂SO₂F, the product of formula F(CF2)nCH2OCF=CF2 in which n is 1, 2, 3, 4 or 5, the product of formula R1CH₂OCF=CF₂ in which R1 is hydrogen or F(CF₂)_{z} and z has the value 1, 2, 3 or 4, the product of formula R3OCF=CH₂ in which R3 is F(CF₂)_{z} and z has the value 1, 2, 3 or 4, or also perfluorobutylethylene (PFBE), fluorinated ethylene propylene (FEP), 3,3,3-trifluoropropene, 2-trifluoromethyl-3,3,3-trifluoro-1-propene, 2,3,3,3-tetrafluoropropene or HFO-1234yf, E-1,3,3,3-tetrafluoropropene or HFO-1234zeE, Z-1,3,3,3-tetrafluoropropene or HFO-1234zeZ, 1,1,2,3-tetrafluoropropene or HFO-1234yc, 1,2,3,3-tetrafluoropropene or HFO-1234ye, 1,1,3,3-tetrafluoropropene or HFO-1234zc, and chlorotetrafluoropropene or HCFO-1224.

9. Material according to any one of the preceding claims, **characterized in that** the electron-conducting additive is chosen from the different allotropic forms of carbon or conducting organic polymers.

10. Process for the preparation of the material according to any one of Claims 1 to 9, **characterized in that** it comprises (i) at least a stage of preparation of a suspension involving:
- one or more organic salts of formula A;
- an electron-conducting additive;
- a polymer binder according to one of Claims 4 to 8;
- one or more volatile solvents;
- an electrode active material chosen from a lithium oxide, phosphate, fluorophosphate or silicate, and
ii) a stage of preparation of a film starting from the suspension prepared in (i).

11. Process according to Claim 10, **characterized in that** the volatile solvent(s) is or are chosen from organic solvents and water.

12. Process according to Claim 11, **characterized in that** the organic solvents are chosen from N-methylpyrrolidone or dimethyl sulfoxide.

13. Li-ion battery, comprising the material according to any one of Claims 1 to 9.

14. Use of at least one salt of formula A, defined according to one of Claims 1 to 3, as ionic conductivity additive in the manufacture of an electrode composite material of Li-ion or Na-ion storage batteries.
